# EUROPEAN PATENT SPECIFICATION

(11) **EP 3 408 112 B1**
(45) Date of publication and mention of the grant of the patent: **04.03.2020**
(21) Application number: 17714272.6
(22) Date of filing: 27.01.2017
(51) Int. Cl.: B60C 1/00, C08L 15/02, C08L 23/28

(54) **RUBBER COMPOUND TO PRODUCE AN INNER LINER LAYER**
KAUTSCHUKPRÄPARAT ZUR HERSTELLUNG EINER INNENAUSKLEIDUNGSSCHICHT
COMPOSÉ DE CAOUTCHOUC POUR PRODUIRE UNE COUCHE DE REVÊTEMENT INTÉRIEUR

(30) Priority: 28.01.2016 IT UB20160382
(43) Date of publication of application: 05.12.2018
(73) Proprietor: Bridgestone Corporation, Tokyo 104-8340 (JP)
(72) Inventor: AMURRI, Michele, 00122 Roma (IT); D'ALFONSO, Claudio, 00128 Roma (IT); MAUCERI, Alessandro, 00128 Roma (IT)
(74) Representative: Marchetti, Alessio
(86) International application number: PCT/IB2017/050450
(87) International publication number: WO 2017/130154

(56) References cited:
- EP-A1- 1 260 544
- JP-A- 2013 043 916
- US-A1- 2015 284 548

## Description

### TECHNICAL FIELD

The present invention concerns rubber compounds to produce an inner liner layer.

### BACKGROUND ART

In the manufacture of tyres, it is necessary to produce some portions characterized by a high impermeability to oxygen.

One of these portions is the inner liner, which consists of a rubber inner layer used in tubeless tyres, i.e. without inner tube, in order to guarantee that the air contained in the carcass remains pressurized. The inner liner must further ensure that the oxygen remains confined as far as possible to the carcass and does not spread to the other portions of the tyre, causing phenomena of degradation. As is known to a person skilled in the art, a solution to improve the impermeability to oxygen of the inner liner layer is to increase the thickness of the layer itself.

However, another objective of the tyre industry is constant reduction in tyre rolling resistance, and reduction of the thickness of the inner liner contributes to achieving this requirement. In fact, a reduced thickness of the inner liner layer necessarily translates into a smaller quantity of material used and, therefore, reduced tyre weight, with positive effects on the overall energy consumption of the vehicle and on the rolling resistance. From the above, it is immediately evident that a reduction in thickness of the inner liner is possible only if it could be given a high impermeability.

The need was therefore felt to produce a compound for an inner liner layer, the technical characteristics of which are such as to guarantee a high impermeability to oxygen. In this way, in fact, it would be possible to reduce the thickness of the inner liner layer but without affecting the oxygen impermeability.

### DISCLOSURE OF INVENTION

The subject of the present invention is a compound to produce an inner liner layer; said compound comprising a polymer base with cross-linking unsaturated chain comprising at least 50 phr of a halobutyl rubber, a reinforcing filler and a vulcanization system; said compound being characterized in that it comprises an oxygen-proofing chemical in granular form consisting of a mineral filler bonded with fatty acids comprising a chain of carbon atoms ranging in number from 6 to 24 and having at least one unsaturation; said oxygen-proofing chemical being produced by causing the fatty acids and the mineral filler to react in a molar ratio equal to or greater than 5:2; said oxygen-proofing chemical in granular form having dimensions ranging from 5nm to 50µm, preferably 1µm to 10µm.

Here and below, the term "polymer base with cross-linking unsaturated chain" indicates any natural or synthetic non cross-linked polymer able to take on all the chemical-physical and mechanical characteristics typical of the elastomers following cross-linking (vulcanization) with sulphur-based systems.

Here and below, vulcanization system indicates a complex of ingredients comprising at least sulphur and accelerating chemicals which, during production of the compound, are added in a final mixing step, and have the purpose of promoting vulcanization of the polymer base once the compound is subject to a vulcanization temperature.

Preferably, the mineral filler is calcium carbonate.

Preferably, the fatty acids comprise a chain of carbon atoms ranging in number from 16 to 22.

Preferably, said compound comprises the oxygen-proofing chemical in a quantity ranging from 10 to 60 phr.

Preferably, the chains of carbon atoms of said fatty acids comprise a number of unsaturations smaller than or equal to 5.

It has been ascertained that when there are more than five unsaturations, problems of instability can be encountered due to their high reactivity.

Preferably, said fatty acids are selected from the group consisting of oleic acid, linoleic acid, linolenic acid, arachidonic acid and mixtures thereof.

A further subject of the present invention is an inner liner layer produced with the compound subject of the present invention.

A further subject of the present invention is a tyre comprising an inner liner layer produced with the compound subject of the present invention.

### BEST MODE FOR CARRYING OUT THE INVENTION

For a better understanding of the present invention, embodiment examples are given below purely by way of nonlimiting illustration.

### EXAMPLES

Four compounds (A-D) were produced, in which the compounds A and B constitute two comparison examples, whereas the two compounds C and D constitute two examples produced according to the present invention.

In particular, the compound A is a compound for an inner liner layer which comprises calcium carbonate without the presence of fatty acids, and the comparison compound B has the same formulation as the comparison compound A with the difference that it comprises calcium carbonate bonded with fatty acids but without unsaturations.

The compounds C and D according to the invention have the same formulation as the comparison compound A with the difference that they comprise calcium carbonate as the mineral filler, bonded with unsaturated fatty acids.

The procedure for preparation of the compounds described in the examples is reported below. This procedure does not represent a limitation for the present invention.

### - preparation of the compounds -

### (1st mixing step)

The ingredients shown in Table I, with the exclusion of the vulcanization system, were loaded in a tangential rotor mixer with internal volume of 230 to 270 litres before beginning the mixing, reaching a filling factor of 66-72%.

The mixer was operated at a speed of 40-60 r.p.m. and the mixture that formed was discharged once a temperature of 140-160°C had been reached.

### (2nd mixing step)

The mixture thus produced was mixed again in the mixer operated at a speed of 40-60 r.p.m. Subsequently, the compound was discharged once a temperature of 130-150°C had been reached.

### (final mixing step)

The vulcanization system was added to the mixture obtained from the previous mixing step, reaching a filling factor of 63-67%.

The mixer was operated at a speed of 20-40 r.p.m., and the mixture formed was discharged once a temperature of 100-110°C had been reached.

Table I shows the compositions in phr of the compounds according to the invention.

**TABLE I**

| | A | B | C | D |
|---|---|---|---|---|
| Bromobutyl rubber | 80.0 | | | |
| Natural rubber | 20.0 | | | |
| Carbon black | 55.0 | | | |
| Calcium carbonate | 40.0 | -- | -- | -- |
| CaCO₃ bonded with stearic acid | -- | 40.0 | -- | -- |
| Oxygen-proofing chemical* | -- | -- | 40.0 | -- |
| Oxygen-proofing chemical** | -- | -- | -- | 40.0 |
| Accelerant | 2.0 | | | |
| Process oil | 15.0 | | | |
| Sulphur | 1.0 | | | |
| Zinc oxide | 2.5 | | | |

The carbon black used belongs to series 6.

The accelerant used is mercapto benzothiazole disulphide (MBTS).

The oxygen-proofing chemical* is produced with CaCO₃ bonded with oleic acid.

The oxygen-proofing chemical** is produced with CaCO₃ bonded with linoleic acid.

An example of the preparation procedure of the oxygen-proofing chemical is given below.

### - preparation of the oxygen-proofing chemical -

20 g of CaCO₃ (0.19 mol.) were dispersed in 45 ml of distilled water at 75°C. Subsequently, maintaining the temperature at 75°C, 0.74 mol of unsaturated fatty acid (2.10 g of oleic acid or 2.09 g of linoleic acid) were added and the solution was kept under stirring for 30 min. The solution was then maintained in a stove at 70° in a vacuum for one night.

The same procedure was then repeated using 2.8 g of stearic acid (0.74 mol) for preparation of the calcium carbonate chemical used in the comparison compound B.

The compounds of the examples underwent a series of tests to verify their rheometric and oxygen-proofing properties.

The oxygen-proofing test was performed on materials with a thickness of 0.7 mm and using a conventional apparatus such as the MOCON® OX-TRA® (model 2/61). The measurements were taken at a temperature of 25°C.

The need to verify the rheometric properties derives from the suspicion that the presence of unsaturated chains, such as those of the fatty acids used for preparation of the oxygen-proofing chemical, could in some way influence the cross-linking of the rubber.

The rheometric properties were measured according to the ASTM D6204 standard.

Table II shows the results obtained from the above tests. For a simpler interpretation of the results obtained, in Table II the values are expressed in a form indexed to the results of the comparison compound A. As regards the oxygen-proofing values, the lower the indexed value, the higher the impermeability to oxygen.

**TABLE II**

| | A | B | C | D |
|---|---|---|---|---|
| MH (dNm) | 100 | 99 | 96 | 98 |
| t'10 (min) | 100 | 100 | 95 | 99 |
| t' 50 (min) | 100 | 105 | 103 | 103 |
| t'90 (min) | 100 | 104 | 102 | 99 |
| MOONEY SCORCH | 100 | 104 | 100 | 103 |
| Impermeability to oxygen | 100 | 99 | 95 | 90 |

As can be clearly seen from a comparison of the values reported in Table II, the compounds produced according to the present invention, while maintaining substantially unchanged the values relative to the rheometric properties, guarantee a considerable improvement in terms of impermeability to oxygen. In particular, from a comparison between the results relative to the second comparison compound (compound B) and those relative to the compounds of the invention (compounds C and D), it is highlighted that the presence of unsaturations in the chains of the fatty acids used for production of the oxygen-proofing chemical constitutes an essential characteristic for obtaining the above advantages. In fact, the results relative to the second comparison example (compound B) demonstrate that if fatty acids without unsaturations are bonded to the calcium carbonate, the oxygen-proofing capacity of the compound is substantially no different from the use of calcium carbonate on its own (compound A).

## Claims

1. A compound to produce an inner liner layer; said compound comprising a polymer base with a cross-linking unsaturated chain comprising at least 50 phr of a halobutyl rubber, a reinforcing filler and a vulcanization system; said compound being **characterized in that** it comprises an oxygen-proofing chemical in granular form made up of a mineral filler bonded with fatty acids comprising a chain of carbon atoms ranging in number from 6 to 24 and having at least one unsaturation; said oxygen-proofing chemical being produced by causing the fatty acids and the mineral filler to react with a molar ratio that is equal to or greater than 5:2; said oxygen-proofing chemical in granular form having dimensions ranging from 5nm to 50µm.

2. A compound to produce an inner liner layer according to claim 1, **characterized in that** said oxygen-proofing chemical in granular form has dimensions ranging from 1nm to 10µm.

3. A compound to produce an inner liner layer according to claim 1 or 2, **characterized in that** said mineral filler is calcium carbonate.

4. A compound to produce an inner liner layer according to one of the preceding claims, **characterized in that** the fatty acids comprise a chain of carbon atoms ranging in number from 16 to 22.

5. A compound to produce an inner liner layer according to one of the previous claims, **characterized in that** it comprises the oxygen-proofing chemical in a quantity ranging from 10 to 60 phr.

6. A compound to produce an inner liner layer according to one of the previous claims, **characterized in that** the chains of carbon atoms of said fatty acids comprise a number of unsaturations that is smaller than or equal to 5.

7. A compound to produce an inner liner layer according to one of the previous claims, **characterized in that** said fatty acids are chosen in the group consisting of oleic acid, linoleic acid, linolenic acid, arachidonic acid and mixtures thereof.

8. An inner liner layer produced with a compound according to one of the previous claims.

9. A tyre **characterized in that** it comprises an inner liner layer according to claim 8.

## Patentansprüche

1. Verbindung zum Herstellen einer Innenauskleidungsschicht; wobei die Verbindung eine Polymerbasis mit einer vernetzenden ungesättigten Kette, umfassend mindestens 50 phr eines Halobutylkautschuks, einen verstärkenden Füllstoff und ein Vulkanisationssystem umfasst; wobei die Verbindung **dadurch gekennzeichnet ist, dass** sie eine sauerstoffdichte Chemikalie in Granulatform umfasst, die aus einem mineralischen Füllstoff besteht, der mit Fettsäuren gebunden ist, die eine Kette von Kohlenstoffatomen im Zahlenbereich von 6 bis 24 umfassen und mindestens eine Ungesättigtheit aufweisen; wobei die sauerstoffdichte Chemikalie hergestellt wird, indem bewirkt wird, dass die Fettsäuren und der mineralische Füllstoff mit einem Molverhältnis von gleich oder größer als 5:2 reagieren; wobei die sauerstoffdichte Chemikalie in Granulatform Abmessungen im Bereich von 5 nm bis 50 µm aufweist.

2. Verbindung zum Herstellen einer Innenauskleidungsschicht nach Anspruch 1, **dadurch gekennzeichnet, dass** die sauerstoffdichte Chemikalie in Granulatform Abmessungen im Bereich von 1 nm bis 10 µm aufweist.

3. Verbindung zum Herstellen einer Innenauskleidungsschicht nach Anspruch 1 oder 2, **dadurch gekennzeichnet, dass** der mineralische Füllstoff Calciumcarbonat ist.

4. Verbindung zum Herstellen einer Innenauskleidungsschicht nach einem der vorhergehenden Ansprüche, **dadurch gekennzeichnet, dass** die Fettsäuren eine Kette von Kohlenstoffatomen im Zahlenbereich von 16 bis 22 umfassen.

5. Verbindung zum Herstellen einer Innenauskleidungsschicht nach einem der vorhergehenden Ansprüche, **dadurch gekennzeichnet, dass** sie die sauerstoffdichte Chemikalie in einer Menge im Bereich von 10 bis 60 phr umfasst.

6. Verbindung zum Herstellen einer Innenauskleidungsschicht nach einem der vorhergehenden Ansprüche, **dadurch gekennzeichnet, dass** die Kohlenstoffatomketten der Fettsäuren eine Anzahl von Ungesättigtheiten aufweisen, die kleiner als oder gleich 5 ist.

7. Verbindung zum Herstellen einer Innenauskleidungsschicht nach einem der vorhergehenden Ansprüche, **dadurch gekennzeichnet, dass** die Fettsäuren ausgewählt sind aus der Gruppe, bestehend aus Ölsäure, Linolsäure, Linolensäure, Arachidonsäure und Mischungen davon.

8. Innenauskleidungsschicht, hergestellt mit einer Verbindung nach einem der vorhergehenden Ansprüche.

9. Reifen, **dadurch gekennzeichnet, dass** er eine Innenauskleidungsschicht nach Anspruch 8 umfasst.

## Revendications

1. Composé pour produire une couche de revêtement interne ; ledit composé comprenant une base polymère avec une chaîne insaturée de réticulation comprenant au moins 50 pcc d'un caoutchouc halobutyle, une charge renforçante et un système de vulcanisation ; ledit composé étant **caractérisé en ce qu'il** comprend une substance chimique faisant barrage à l'oxygène sous forme granulaire constituée d'une charge minérale liée à des acides gras comprenant une chaîne d'atomes de carbone allant en nombre de 6 à 24 et ayant au moins une insaturation ; ladite substance chimique faisant barrage à l'oxygène étant produite en amenant les acides gras et la charge minérale à réagir avec un rapport molaire qui est égal ou supérieur à 5:2 ; ladite substance chimique faisant barrage à l'oxygène sous forme granulaire ayant des dimensions allant de 5 nm à 50 µm.

2. Composé pour produire une couche de revêtement interne selon la revendication 1, **caractérisé en ce que** ladite substance chimique faisant barrage à l'oxygène sous forme granulaire a des dimensions allant de 1 nm à 10 µm.

3. Composé pour produire une couche de revêtement interne selon la revendication 1 ou 2, **caractérisé en ce que** ladite charge minérale est du carbonate de calcium.

4. Composé pour produire une couche de revêtement interne selon l'une des revendications précédentes, **caractérisé en ce que** les acides gras comprennent une chaîne d'atomes de carbone allant en nombre de 16 à 22.

5. Composé pour produire une couche de revêtement interne selon l'une des revendications précédentes, **caractérisé en ce qu'il** comprend la substance chimique faisant barrage à l'oxygène en une quantité allant de 10 à 60 pcc.

6. Composé pour produire une couche de revêtement interne selon l'une des revendications précédentes, **caractérisé en ce que** les chaînes d'atomes de carbone desdits acides gras comprennent un nombre d'insaturations qui est inférieur ou égal à 5.

7. Composé pour produire une couche de revêtement interne selon l'une des revendications précédentes, **caractérisé en ce que** lesdits acides gras sont choisis dans le groupe constitué d'acide oléique, acide linoléique, acide linolénique, acide arachidonique et des mélanges de ceux-ci.

8. Couche de revêtement interne produite avec un composé selon l'une des revendications précédentes.

9. Pneu **caractérisé en ce qu'il** comprend une couche de revêtement interne selon la revendication 8.
